(19)

Europäisches
Patentamt
European
Patent Office
Office européen
des brevets

(11) **EP 1 479 734 B1**

(12) **EUROPEAN PATENT SPECIFICATION**

(45) Date of publication and mention
of the grant of the patent:
**11.02.2009 Bulletin 2009/07**

(51) Int Cl.:
*C09D 4/00* *(2006.01)*       *C09D 5/00* *(2006.01)*

(21) Application number: **03076510.1**

(22) Date of filing: **20.05.2003**

(54) **Nano-structured surface coating process, nano-structured coatings and articles comprising the coating**

Verfahren zur Herstellung von Nanostrukturierten Oberflächenbeschichtungen, deren Beschichtungen und Gegenständen enthaltend die Beschichtung

Procede de preparation d'un revetement de surface nanostructure, revetements nanostructures et articles contenant le revetement

(84) Designated Contracting States:
**AT BE BG CH CY CZ DE DK EE ES FI FR GB GR HU IE IT LI LU MC NL PT RO SE SI SK TR**

(43) Date of publication of application:
**24.11.2004 Bulletin 2004/48**

(73) Proprietor: **DSM IP Assets B.V.**
**6411 TE Heerlen (NL)**

(72) Inventors:
• **Thies, Jens Christoph**
  **6229 AL Maastricht (NL)**
• **Currie, Edwin**
  **6133 AM Sittard (NL)**
• **Meijers, Guido Jozefina Wilhelmus**
  **6171 NL Stein (NL)**

• **Nijenhuis, Atze Jan**
  **6132 HB Sittard (NL)**
• **Southwell, John Edmond**
  **Elgin, IL 60120 (US)**
• **Tronche, Christopher Frederic**
  **Elgin, IL 60120 (US)**

(74) Representative: **Alexander, Sean Matthew**
**DSM Intellectual Property**
**DSM IP Assets BV**
**Geleen Office**
**P.O. Box 9**
**6160 MA Geleen (NL)**

(56) References cited:
**DE-A- 19 746 885**       **US-A- 6 130 152**
**US-B1- 6 319 852**       **US-B1- 6 455 103**

**EP 1 479 734 B1**

**Description**

The invention relates to a process for the preparation of nano-structured and/or nano-porous surfaces, coatings having a nano-structured and/or nano-porous surface and articles comprising said coatings. The invention also relates to the use of said coatings, in particular as anti-reflective coatings.

The drive for ever smaller features sizes in surfaces and coatings has been brought about through a desire to achieve attractive properties for applications in, for example micro-electronics, anti-reflective coatings for displays and super-hydrophobic or even self cleaning surfaces. The numerous techniques for preparation of nano-structured surfaces or coatings can be regarded as fitting into one of two classes.

The first class is know as the top down approach and is primarily concerned with the manufacture of progressively smaller and smaller feature sizes in photolithographic processes in an effort to maximise microprocessor performance as predicted by Moore's Law (Moore, G.E.; Electronics, vol 38, no 8, April 19th, 1965). Any person skilled in the art will realize that in such a photolithographic process, the minimum feature size is limited by the wavelength of the radiation being applied. Furthermore the nano-structured surfaces or coatings are achieved by dissolving the non-exposed areas of the mask with solvent (development) and or subsequent etching of the substrate. Extremely short wavelength techniques such as electron beam writing or X-ray photolithography have been used to prepare features of sub 50nm is size Snow, E. S. and Campbell P. M., Science, Pg 1639-1641,1995),( Crommie, M. F.; Lutz, C.P.; Eigler, D. M.; Science, 262, Pg 218-219, 1993.),( Smith, H. I.; Rogers, J. A.; Bernacki, S.E.; J. Vac. Sci. Technol., Pg 913-917, 1973. ). Top down lithographic techniques are especially applied where regular and straight features are required as is the case for photo-resists in the microprocessor field. Manufacture of random, irregular structures and structuring over large surface areas ($dm^2$ to $m^2$) is extremely difficult, time consuming and therefore expensive via these techniques.

The second class of nano-structuring techniques can be regarded as so-called bottom up techniques and are usually based on the self-assembly or phase art, phase separation can be achieved in two ways. Firstly, by separation of two incompatible polymers (e.g. Polymethyl methacrylate (PMMA) and Polystyrene PS) (Steiner et al., Science, Vol 283, pg 520-522, 1999), during the evaporation of a solvent, capable of dissolving both polymers separation of small molecules and/or polymers. Especially in the field of random nano-structured coatings phase separation techniques have been applied. In the state of the homogeneously. As the solvent evaporates and the relative concentration of the polymers increases, a phase separation of the two polymers occurs. The nano-structure is formed by removal of one of the polymers by a solvent, which will selectively dissolve only one of the polymers (e.g. Cyclohexane for PS). This is similar to the development step of a photo-resist.

Secondly, phase separation can be induced by crosslinking in a mixture of components where at least one component is capable of crosslinking and at least one other is not(Ibn-Elhaj and Schadt, Nature, Vol 410, pg 796-799, 2001). The mixture is homogeneous prior to crosslinking and the phase separation occurs during the formation of the crosslinked network. Again the nano-structure is formed by removal of a material, in this case the non-crosslinkable component. As phase separation is a dynamic process, the size and distribution of the features formed under both of the above techniques is strongly dependent on the rate or kinetics of the phase separation. Hence it is important to realise that parameters such as temperature and in the case of photo-induced crosslinking, the photo-initiator concentration and/or radiation intensity all will affect the feature size of the nano-structured coatings. Hence processing ease and reproducibility as well as the necessary washing step may prove to be sizable hurdles in the commercialisation of such technologies, especially for large surface areas. Thus, there is still a need for an simple technique that allows the manufacture of nano-structured coatings.

US-B-6 55 103 discloses a method for producing inorganic multilayered optical system.

DE-A-197 46 885 discloses process for producing nanostructured mouldings and layers.

US-A-6 130 152 discloses method of forming a porous dielectric on a semiconductor substrate, whilst US-B-6 319 852 discloses a method for forming a nanoporous dielectric on a semiconductor substrate.

Surprisingly, a very elegant and simple process has now been found for the preparation of nano-structured and/or nano-porous coatings. The process according to the invention, which is a process for the preparation of nano-structured and/or nano-porous coatings having a thickness of between 50-200 nm, comprises the steps of

a) applying a mixture, which mixture comprises

i) reactive nano-particles having organic polymerisable groups on their surface,
ii) at least one solvent

to a substrate,
b) inducing crosslinking and/or polymerising in the mixture on the substrate.

The mixture may optionally comprise a compound having at least one polymerisable group in an amount that is small enough to allow the formation of a nano-structured surface after cure of the formulation.

Since the reactive nano-particles in step a always have more than one polymerisable group on their surface, the polymerisation in step b results in the formation of a crosslinked phase. Therefore, in this text, the terms polymerise or polymerisation is used interchangeably with cross-linking or cross-linked.

Within the context of the invention the term surface nano-structured coatings refers to coatings with a degree of surface roughness where the dimensions of the features on the surface are larger than or equal to the smallest cross-sectional dimension of an individual nano-particle as defined by the manufacturer. The term nano-porous coatings refers to coatings that have both a nanostructure on the surface and nanosized voids in the coating.

In the framework of this invention the term "nano-particles" is defined as particles of which the majority has a diameter of less than a micrometer. Within the framework of the invention a nano-particle is elongated when its shape possess a degree of anisotropy or when the aspect ratio, defined as the length divided by the diameter is greater than unity. In the framework of this invention reactive nano-particles are defined as nano-particles of which the surface has been modified with polymerisable organic groups. In a preferred embodiment of the process according to the invention, all nano-particles are reactive. The preparation of reactive nano-particles as such is known in the art, and has been described in e.g. US06025455.

In this text the term diluent or reactive diluent is used to describe a compound having at least one polymerisable group. In this text the term hard coat refers to a coating comprising nano-paricular species, optionally reactive nano-particular species, in a crosslinked polymeric network, wherein the volume fraction of reactive diluent is such that there are no void spaces and/or surface nano-structures present in the coating.

As already stated above, it has surprisingly been found that simply by using no or relatively little of a diluent, a coating having a nano-structured surface can be obtained. It is an advantage of the process of the invention that it results in coatings having excellent anti-reflective properties.

After having found that nano-structured coatings can so easily be obtained, we looked for an explanation as to why these coatings have nano-structured surfaces and such good anti-reflective properties. Without being bound to theory, it is our believe that the explanation lies in the formation of voids in the coating.

In the drawing below, elongated particles are schematically shown in 4 different situations.

| isolated | percolation threshold | random close packing | optimum packing |

Particles are called isolated particles when the individual particles are surrounded by the continuous medium, in the case of coatings the polymerized or crosslinked networks. The term percolation threshold is used to describe the minimum density (concentration) of nano-particles at which particles are in contact with other particles present in a polymerized or crosslinked network. The term random close packing is used for the final packing arrangement reached by uniform particles randomly put together, i.e. without any influence that may result in alignment of the particles. The term optimum packing is used to describe the highest number density attainable with nano-particular species of certain form, or a distribution thereof. This usually necessitates an ordered macroscopic arrangement of the particles.

From literature it is known that the percolation threshold for spherical particles is 28.5 volume%, the random close packing 64% and the optimum packing 74 volume %.[ Saar, M.O. et al; Earth and Planetary Science Letters, 187, pg 367-379, 2001; Villarruel, F. X. et al; Condensed Mater, 1st february 2000.] When the particles become elongated, the percolation threshold drops (the particles will sooner be in contact, so fewer particles will result in a situation, where there are particles in contact). For elongated particles the optimum density packing increases. Theoretical calculations show that the percolation threshold of perfect cylinders with an aspect ratio of 100 is around 1 volume%, whereas the optimum packing is 91 volume%. More importantly, the random close packing drops; the experimental value for rods with an aspect ration of 4 is roughly 50% [Villarruel, F. X. et al; Condensed Mater, 1st february 2000.].

It may be clear that as the volume percentage for the percolation threshold drops and the optimum packing volume perccentage increases, the chance of obtaining a non-optimum packing arrangement increases as well. Generally, the random close packing is recognized as the density attainable by a collection of particles, i.e. without any influence that may result in alignment of particles, such as vibrations, selective positioning etc. This is thus the volume fraction or particle density obtained in a coating after deposition by e.g. solvent casting, spin coating, and dip coating. It will be understood that when the volume fraction of diluents is less than the remaining volume fraction in a randomly close packed arrangement, voids form in the coating and at the surface, the coating will be rough and/or porous, instead of being essentially flat.

In terms of volume fractions the invention can be described as follows, the total volume of the coating after processing can be expressed as

$$V_T = V_{NP} + V_A + V_{RD} \quad (eq.1)$$

Where $V_T$ is the total coating volume defined as the height of the highest feature of the coating multiplied by the length and breadth of the coating. $V_{NP}$ is the total volume fraction of nano-particles within the coating, $V_A$ is the total volume fraction of air within the coating and $V_{RD}$ is the total volume fraction of reactive diluents within the coating.

Within the framework of the invention a surface nano-structured and/or nano-porous coating is acheived under the following conditions.

$$V_{RD} < V_T - V_{RCP} \quad (eq.2)$$

Where $V_{RCP}$ is the random close packing volume fraction.

Thus, the invention relates to coatings obtained from process claim 1.

Furthermore the invention also relates to formulations for the preparation of nano-structured and/or nano-porous coatings, the coatings obtained from these formulations, articles comprising said coatings and the use of said coatings. In particular, further embodiments are defined in claims 2-13, claims 15-22, 23-26, 27-29, 30, 31, 32, 33 and 34.

Reactive nano-particles

In a preferred embodiment, the majority of the nano-particles have a diameter of less than 400 nm, more preferably the majority of particles have a diameter of less than 50 nm. Most preferably all particles have a diameter smaller than 50 nm. Preferably, the reactive nanoparticles have a length of less than 350 nm. In a preferred embodiment, the majority of the nano-particles have a length in the range of 30 to 300 nm. Most preferably, particles used have such a diameter that they do not (significantly) influence the transparency of the eventual coating. As will be obvious to anyone skilled in the art the random packing density of the nano-particlaur species is detemined by the shape and the relative size and size distribution of the nano-particles. Hence it may be advantageous to use nano-particles of differing shapes and sizes to precisely contol the size of the surface nano-structures and/or nano-pores.

In a preferred embodiment, the reactive nano-particles have an aspect ratio greater than 1 (i.e. the particles are elongated), more preferably, they have an aspect ratio grater than 5, and most preferably, they have an aspect ratio of greater than 10.

Processes for determining the particle dimension include BET adsorption, optical or scanning electron microscopy, or atomic force microscopy (AFM) imaging.

In the process according to the invention the coating may comprise either organic or inorganic nano-particles. Examples of organic nano-particles are carbon nano-tubes or nano-spheres. Preferably, the nano-particles are inorganic nano-particles. Suitable inorganic particles are for example oxide particles. Preferred oxide particles are particles of an oxide selected from the group of aluminium oxide, silicium oxide, zirconium oxide, titanium oxide, antimony oxide, zinc oxide, tin oxide, indium oxide, and cerium oxide. It is also possible to use a mixture of particles from different oxides or to use particles of mixed oxides. Most preferably, the nano-particles are particles of aluminium oxide, zirconium oxide or silica oxide. The refractive index of the coating and effective refractive index of the coating/air interface can in part be tuned by the choice of oxide used.

It has been found that it is often advantageous to use stabilized nano-particles in the process according to the invention. In the framework of the invention, the term "stabilized particles" means particles that have organic groups on their surface. These organic groups may or may not comprise polymerisable groups. Herein, nano-particles having crosslinking groups on their surface are called "reactive nano-partides". Such reactive nano-particles may or may not comprise additional, non-polymerisable organic groups. Additional non-polymerisable groups may be used to tune the overall polarity and thus the hydrophobicity or hydrophilicity of the particle and the resultant coating. In a preferred embodiment of the process according to the invention, all nano-particles are reactive.

The preparation of reactive nano-particles as such is known in the art, and has been described in e.g. US06025455.

The amount of particles preferably is between 70-100% relative to the weight of the coating.

Substrates

A wide variety of substrates may be used as a substrate in the process according to the invention. Suitable substrates are for example flat or curved, rigid or flexible substrates including films of for example polycarbonate, polyester, polyvinyl acetate, polyvinyl pyrollidone, polyvinyl chloride, polyimide, polyethylene naphthalate, polytetrafluoro ethylene, nylon, polynorbornene or amorphous solids, for example glass or crystalline materials, such as for example silicon or gallium arsenide. Metallic substrated may also be used. Preferred substrates for use in display applications are for example glass, polynorbornene, polyethersulfone, polyethyleneterphtalate, polyimide, cellulose triacetate, polycarbonate and polyethylenenaphtalate.

A free-standing single layer anti-reflective hard-coat film or coating obtainable by a process according to the invention may be obtained by preparing a film or coating on a substrate and subsequently removing the film or coating from the substrate after crosslinking. The removal of the film or coating from the substrate should always take place after crosslinking.

Application of the mixture to a substrate

The mixture may be applied onto the substrate by any process known in the art of wet coating deposition. Examples of suitable processes are spin coating, dip coating, spray coating, flow coating, meniscus coating, capillary coating and roll coating.

Typically, the reactive nano-particles are mixed with at least one solvent and, optionally crosslinking initiator and optionally a reactive diluent, to prepare a mixture that is suitable for application to the substrate using the chosen method of application. Generally, the mixture contains 0.5-50 wt% solids, defined as all components excluding the solvent, relative to the total weight of the mixture.

Solvent

In principle, a wide variety of solvents may be used. However, the combination of the solvents and all other materials present in the mixture should preferentially form stable suspensions or solutions.

The solvent must have the ability to form stable suspensions of the reactive nano-particles in order to facilitate a random close packing arrangement of the reactive nano-particles upon application, i.e. after evaporation of the solvent. If a solvent is used in which the reactive nano-particles aggregate, the evaporation of the solvent may result in phase separation off the reactive nano-particles from the mixture. This would disadvantageously lead to opaque films if the size of the phase separated domains are of the order of, or larger than, the wavelengths of visible light.

Nano-particles typically are added to the mixture in the form of a suspension. The same solvent may be used to adjust the mixture so that it has the desired properties. However, other solvents may also be used.

Preferably the solvent used evaporates after applying the mixture onto the substrate. In the process according to the invention, optionally the mixture may after application to the substrate be heated or treated in vacuum to aid evaporation of the solvent.

Examples of solvent that may be suitable are 1,4-dioxane, acetone, acetonitrile, chloroform, chlorophenol, cyclohexane, cyclohexanone, cyclopentanone, dichloromethane, diethyl acetate, diethyl ketone, dimethyl carbonate, dimethylformamide, dimethylsulphoxide, ethanol, ethyl acetate, m-cresol, mono- and dialkyl substituted glycols, N,N-dimethylacetamide, p-chlorophenol, 1,2-propanediol, 1-pentanol, 1-propanol, 2-hexanone, 2-methoxyethanol, 2-methyl-2-propanol, 2-octanone, 2-propanol, 3-pentanone. 4-methyl-2-pentanone, hexafluoroisopropanol, methanol, methyl acetate, methyl acetoacetate, methyl ethyl ketone, methyl propyl ketone, n-methylpyrrolidone-2, n-pentyl acetate, phenol, tetrafluoro-n-propanol, tetrafluoroisopropanol, tetrahydrofuran, toluene, xylene and water. Alcohols, ketones and esters based solvents may also be used, although the solubility of acrylates may become an issue with high molecular weight alcohols. Halogenated solvents (such as dichloromethane and chloroform) and hydrocarbons (such as hexanes and cyclohexanes), may also be suitable. Preferred solvents are methanol or iso propanol.

Compound having at least one polymerisable group (also called "diluent" or "reactive diluent")

In principle, a wide variety of maternal are suitable to be used as the reactive diluent. The relative amount of reactive diluent with respect to the relative amount of reactive elongated nano-particles must be so small that it allows formation of a nano-structured surface. A way of determining of a coating has a surface nano-structure and/or nano-pores, is to apply the coating to a transparent substrate, crosslinking, and subsequently measuring the tranmission. When there is an increase in transmission of light in at least part of the spectrum of light with a wavelength between 400 and 800 nm of at least 0.5% relative to the surface of the same substrate without a coating, the surface is defined as surface nano-structured and/or nano-porous. Preferably, the increase is at least 1%, and even more preferred at least 2% for at least a part of the electromagnetic spectrum between 400 and 800 nm. The coating preferably has a thickness of between 50-200 nm. The exact amount of diluent depends on the particle size, shape, and size distribution, and can thus not be given exactly. However, typically, the amount of diluent is less than 20 wt%, relative to the total weight of the mixture as applied in step a) of the process according to the invention. Preferably, the amount of diluent is less than 15wt%. Although it is not necessary to use any diluent, the mechanical properties of the coating will generally be better when at least some diluent is present, e.g., at least 1 wt%. Additionally, the higher the crosslinking density of the coating, the better the mechanical properties will be.

As mentioned, in principle a wide variety of materials are suitable to be used as the reactive diluent, for example monomers or oligomers having crosslinking groups. Monomers or oligomers having only one crosslinking group per molecule may be used, but only in combination with other crosslinking components that do have at least two crosslinking groups. Preferably monomers or oligomers having at least two or more crosslinking groups per molecule are used. It is also possible that the reactive diluent comprises a mixture of compounds that after the induction of crosslinking in step b, together form a crosslinked phase. The mixture may comprise compounds that are by itself crosslinking, such as for example different acrylates or it may comprise compounds that will not crosslink by itself but which form a crosslinked phase in combination with another compound after initiation of the crosslinking reaction, for example copolymerising systems comprising electron rich and electron poor double bonds such as for example maleate/vinyl ether copolymerising systems.

Examples of monomers suitable for use as a reactive diluent and having at least two crosslinking groups per molecule include monomers containing (meth)acryloyl groups such as trimethylolpropane tri(meth)acrylate, pentaerythritol (meth)acrylate, ethylene glycol di(meth)acrylate, tetraethylene glycol di(meth)acrylate, polyethylene glycol di(meth)acrylate, 1,4-butanediol di(meth)acrylate, 1,6-hexanediol di(meth)acrylate, neopentyl glycol di(meth)acrylate, polybutanediol di(meth)acrylate, tripropyleneglycol di(meth)acrylate, glycerol tri(meth)acrylate, phosphoric acid mono- and di(meth)acrylates, C7-C20 alkyl di(meth)acrylates, trimethylolpropanetrioxyethyl (meth)acrylate, tris(2-hydroxyethyl)isocyanurate tri(meth)acrylate, tris(2-hydroxyethyl)isocyanurate di(meth)acrylate, pentaerythritol tri(meth)acrylate, pentaerythritol tetra(meth)acrylate, dipentaerythritol monohydroxy pentacrylate, dipentaerythritol hexacrylate, tricyclodecane diyl dimethyl di(meth)acrylate and alkoxylated versions, preferably ethoxylated and/or propoxylated, of any of the preceding monomers, and also di(meth)acrylate of a diol which is an ethylene oxide or propylene oxide adduct to bisphenol A, di(meth)acrylate of a diol which is an ethylene oxide or propylene oxide adduct to hydrogenated bisphenol A, epoxy (meth)acrylate which is a (meth)acrylate adduct to bisphenol A of diglycidyl ether, diacrylate of polyoxyalkylated bisphenol A, and triethylene glycol divinyl ether, adduct of hydroxyethyl acrylate, isophorone diisocyanate and hydroxyethyl acrylate (HIH), adduct of hydroxyethyl acrylate, toluene diisocyanate and hydroxyethyl acrylate (HTH), and amide ester acrylate.

Examples of suitable monomers having only one crosslinking group per molecule include monomers containing a vinyl group, such as N-vinyl pyrrolidone, N-vinyl caprolactam, vinyl imidazole, vinyl pyridine; isobornyl (meth)acrylate, bornyl (meth)acrylate, tricyclodecanyl (meth)acrylate, dicyclopentanyl (meth)acrylate, dicyclopentenyl (meth)acrylate, cyclohexyl (meth)acrylate, benzyl (meth)acrylate, 4-butylcyclohexyl (meth)acrylate, acryloyl morpholine, (meth)acrylic acid, 2-hydroxyethyl (meth)acrylate, 2-hydroxypropyl (meth)acrylate, 2-hydroxybutyl (meth)acrylate, methyl (meth)acrylate, ethyl (meth)acrylate, propyl (meth)acrylate, isopropyl (meth)acrylate, butyl (meth)acrylate, amyl (meth)acrylate, isobutyl (meth)acrylate, t-butyl (meth)acrylate, pentyl (meth)acrylate, caprolactone acrylate, isoamyl (meth)acrylate, hexyl (meth)acrylate, heptyl (meth)acrylate, octyl (meth)acrylate, isooctyl (meth)acrylate, 2-ethylhexyl (meth)acrylate, nonyl (meth)acrylate, decyl (meth)acrylate, isodecyl (meth)acrylate, tridecyl (meth)acrylate, undecyl (meth)acrylate, lauryl (meth)acrylate, stearyl (meth)acrylate, isostearyl (meth)acrylate, tetrahydrofurfuryl (meth)acrylate, butoxyethyl (meth)acrylate, ethoxydiethylene glycol (meth)acrylate, benzyl (meth)acrylate, phenoxyethyl (meth)acrylate, polyethylene glycol mono(meth)acrylate, polypropylene glycol mono(meth)acrylate, methoxyethylene glycol (meth)acrylate, ethoxyethyl (meth)acrylate, methoxypolyethylene glycol (meth)acrylate, methoxypolypropylene glycol (meth)acrylate, diacetone (meth)acrylamide, beta-carboxyethyl (meth)acrylate, phthalic acid (meth)acrylate, isobutoxymethyl (meth)acrylamide, N,N-dimethyl (meth)acrylamide, t-octyl (meth)acrylamide, dimethylaminoethyl (meth)acrylate, diethylaminoethyl (meth)acrylate, butylcarbamylethyl (meth)acrylate, n-isopropyl (meth)acrylamide fluorinated (meth)acrylate, 7-amino-3,7-dimethyloctyl (meth)acrylate, N,N-diethyl (meth)acrylamide, N,N-dimethylaminopropyl (meth)acrylamide, hydroxybutyl vinyl ether, lauryl vinyl ether, cetyl vinyl ether, 2-ethylhexyl vinyl ether; and compounds represented by the following formula (I)

$$\text{Formula(I)}$$
$$CH_2=C(R^6)\text{-}COO(R^7O)_m\text{-}R^8$$

wherein $R^6$ is a hydrogen atom or a methyl group; $R^7$ is an alkylene group containing 2 to 8, preferably 2 to 5 carbon atoms; and m is an integer from 0 to 12, and preferably from 1 to 8; $R^8$ is a hydrogen atom or an alkyl group containing 1 to 12, preferably 1 to 9, carbon atoms; or, $R^8$ is a tetrahydrofuran group- comprising alkyl group with 4-20 carbon atoms, optionally substituted with alkyl groups with 1-2 carbon atoms; or $R^8$ is a dioxane group-comprising alkyl group with 4-20 carbon atoms, optionally substituted with methyl groups; or $R^8$ is an aromatic group, optionally substituted with $C_1$-$C_{12}$ alkyl group, preferably a $C_8$-$C_9$ alkyl group, and alkoxylated aliphatic monofunctional monomers, such as ethoxylated isodecyl (meth)acrylate, and ethoxylated lauryl (meth)acrylate.

Oligomers suitable for use as the reactive diluent are for example aromatic or aliphatic urethane acrylates or oligomers based on phenolic resins (ex. bisphenol epoxy diacrylates), and any of the above oligomers chain extended with ethoxylates. Urethane oligomers may for example be based on a polyol backbone, for example polyether polyols, polyester polyols, polycarbonate polyols, polycaprolactone polyols, acrylic polyols, and the like. These polyols may be used either individually or in combinations of two or more. There are no specific limitations to the manner of polymerization of the structural units in these polyols. Any of random polymerization, block polymerization, or graft polymerization is acceptable. Examples of suitable polyols, polyisocyanates and hydroxylgroup-containing (meth)acrylates for the formation of urethane oligomers are disclosed in WO 00/18696.

Combinations of compounds that together may result in the formation of a crosslinked phase and thus that in combination are suitable to be used as the reactive diluent are for example carboxylic acids and/or carboxylic anhydrides combined with epoxies, acids combined with hydroxy compounds, especially 2-hydroxyalkylamides, amines combined with isocyanates, for example blocked isocyanate, uretdion or carbodiimide, epoxies combined with amines or with dicyandiamides, hydrazinamides combined with isocyanates, hydroxy compounds combined with isocyanates, for example blocked isocyanate, uretdion or carbodiimide, hydroxy compounds combined with anhydrides, hydroxy compounds combined with (etherified) methylolamide ("amino-resins"), thiols combined with isocyanates, thiols combined with acrylates or other vinylic species (optionally radical initiated), acetoacetate combined with acrylates, and when cationic crosslinking is used epoxy compounds with epoxy or hydroxy compounds.

Further possible compounds that may be used as the reactive diluent are moisture curable isocyanates, moisture curable mixtures of alkoxy/acyloxy-silanes, alkoxy titanates, alkoxy zirconates, or urea-, urea/melamine-, melamine-formaldehyde or phenol-formaldehyde (resol, novolac types), or radical curable (peroxide- or photo-initiated) ethylenically unsaturated mono- and polyfunctional monomers and polymers, e.g. acrylates, methacrylates, maleate/vinyl ether), or radical curable (peroxide- or photo-initiated) unsaturated e.g. maleic or fumaric, polyesters in styrene and/or in methacrylates.

Method for crosslinking or polymerisation

Any cross-linking method that may cause the mixture to crosslink so that a coating is formed is suitable to be used in the process according to the invention. Suitable ways to initiate crosslinking are for example electron beam radiation, electromagnetic radiation (UV, Visible and Near IR), thermally and by adding moisture, in case moisture curable compounds are used. In a preferred embodiment crosslinking is achieved by UV-radiation. The UV-crosslinking may take place through a free radical mechanism or by a cationic mechanism, or a combination thereof. In another preferred embodiment the crosslinking is achieved thermally.

Initiator

An initiator may be present in the mixture to initiate the crosslinking reaction. The amount of initiator may vary between wide ranges. A suitable amount of initiator is for example between above 0 and 5 wt% with respect to total weight of the compounds that take part in the crosslinking reaction.

When UV-crosslinking is used to initiate crosslinking, the mixture preferably comprises a UV-photo-initiator. A photo-initiator is capable of initiating a crosslinking reaction upon absorption of light, thus, UV-photo-initiators absorb light in the Ultra-Violet region of the spectrum. Any known UV-photo-initiators may be used in the process according to the invention.

It is important to realize that the the properties of the reactive nano-particles, such as e.g. the size, shape, size distribution and the surface modifaction have a strong effect on the way in which the nano-particles are distributed in the coating, and thus, on the volume fraction of air in the coating. As a result of this, the amount of diluent that may be used in the formulation from which a coating is prepared, can not be defined in exact weight percentages. However, it will be understood that the amount of diluent must be small enough to allow the formation of a nano-structured surface and/or nano pores after cure of the formulation. When anti-reflective properties are desired, the amount of diluent should be such that it results in an increase of at least 0.5% in transmission of a transparent substrate after the formulation has been applied and cured on that substrate for at least part of the visible spectrum i.e. for light having a wavelength of between 400 and 800 nm, relative to the transmission of the same substrate without the cured formulation applied on it.

It has been shown that it is also possible to achieve an increase in transmission over the whole visible region of the light spectrum by preparing multilayer systems of coatings in which each coating has a carefully selected thickness and refractive index (US 5582859). However, multilayer coatings suffer from two sets of problems. The first is that the anti-reflective performance of multilayer coatings suffers from angle-dependency (D. Chen, Solar Energy Materials & Solar Cells, 86 (2001) 313-336). This means that transmission will vary from the normal to oblique angles. Secondly, reproducible processing of such multilayer coatings with precisely controlled thickness and optical properties is difficult and therefore costly and time-consuming.

The composition of the mixture as well as the processes chosen for the various steps and the exact process conditions of the steps in the process according to the invention will together determine the nature of the surface nano-structure and/or nano-pores of the film or coating obtained. The surface structure (i.e. the depth of the troughs and distance between ridges and pores, see figure 2) is e.g. affected by temperature, deposition process and the chosen method of crosslinking. Secondly the mechanical properties of the film or coating are affected by the chosen methods and conditions. For example, the crosslink density of the crosslinked phase may be increased by heating the film or coating during or after crosslinking. By increasing the crosslink density, the hardness, the modulus and Tg of the resulting film or coating may be increased. Furthermore, such an extra heating step allows the optional adhesion promoter to react with the substrate and thus improves adhesion and also scratch resistance. For polymeric substrates the post-backing may also improve the adhesion to the substrate.

Preferably the coatings of the present invention have a hardness equal to or greater than 0.5 GPa, preferably more than 1.0 GPa, most preferably 2.0 GPa, as measured by nano-indention as described in Ex. E. Preferably the coatings herein have a reduced modulus equal to or greater than 8 GPa, more preferably 12 GPa, most preferably 35 GPa, as measured by nano-indention as described in Example E. As a result of the above, described process, durable coatings typically exhibiting a nano-structured surfaces and/or nano-porous morphology are formed, whereas conventional single layer hard-coats are smooth on the nano-scale level. The coating according to the invention can be prepared in any desired thickness. The coatings according to the invention have a thickness ranging between 50 nm and 200 nm. The presence of the surface nano-structures and/or nano-pores leads to a number of functional properties. Firstly the surface nano-structured and/nano-porous coating can act as a single layer anti-reflective coating.

Such coatings are herein referred to as AR-coatings according to the invention. Anti-reflective films or coatings are herein defined as films or coatings that when deposited onto a transparent or semi-transparent substrate have a transmission higher than the transmission of the substrate in at least part of the visible light spectrum. Typically, such films are free or substantially free of structural features large enough to be capable of scattering visible light, and such films should thus be optically transparent.

These coatings have a refractive index value that decreases from the refractive index value of the crosslinked phase to that of air over a spatial length scale. The nano-structure of the surface, i.e. the ridges and troughs and pores, achieves the gradient of the refractive index. Furthermore, these coatings are expected to have small nano-meter sized void spaces within the bulk of the coating between individual nano-particles or clusters thereof. These air filled voids will further reduce the effective refractive index of the coatings and thus add to the anti-reflective properties of the surface nano-structures and nano-pores.

In a preferred embodiment, the nano-structured and /or nano-porous films or coatings according to the invention increases the optical transmission of a substrate on which they are present for at least a range of visible wavelengths of the electromagnetic spectrum.

Therefore, the combination good mechanical properties as well as anti-reflective performance will allow for the use of these single layer anti-reflective hard-coats in applications were mechanical durability and anti-reflective performance on flat or on non-flat substrates are advantageous. These applications include anti-reflective hard coatings for automobile and airplane wind screens, displays in general, television tubes, flexible displays and spectacles.

Secondly the surface nano-structured and/nano-porous coating structure can be used to affect the wetting properties of the coating.

Generally, a hydrophobic material or coating is characterised by a static contact angle of water of 90° or above. Hydrophobic polymeric materials such as poly(tetrafluorethene) (PTFE) or polypropylene (PP) have been available for decades. These materials suffer from a limited hydrophobicity, as well as inferior mechanical properties as compared to engineering materials or highly crosslinked coatings. For instance, PP has a static contact angle of water of roughly 100° whereas PTFE, which is amongst the most hydrophobic polymeric material known, has a static contact angle of water of roughly 112°.

Some hydrophobic coatings are being referred to in the art as superhydrophobic coatings. Superhydrophobic coatings are generally defined by a static water contact angle above 140° (Nun, Oles & Schleich, Macromol. Symp. 187 (2002) 677-682).

Within the framework of the invention, a combination of surface roughness, due to surface nano-structures and/or nano-pores together with polar surface chemistry achieve static water contact angles below 60°, preferably below 40°. Conversely, the coating may also be affected so that the static water contact angle is above 90° and preferably 120° if the surface chemistry of the nano-structured and/nano-porous coating is apolar, for example via the presence of apolar surface modifying groups on the nano-particles.

Combining the wetting properties with the anti-reflection properties, the surface nano-structured and /or nano-porous films or coatings according to the invention increases the optical transmission of a substrate on which they are present to visible wavelengths of the electromagnetic spectrum while simultaneously exhibiting with a static water contact angle of above 90°, preferably 120° and most preferably 140°.

Furthermore due to the surface nano-structures and/or nano pores other properties such as low refractive index, low optical dissipation (low optical loss), low dielectric constant, high relative surface area, low contact area, low adhesion and coating porosity are envisaged. Applications derived from the above properties include the following; anti-reflective coatings for all kinds of display applications; biological devices and coating with wetting characteristics; easy to clean and self-cleaning coatings; easy to clean and self-cleaning anti-reflective coatings; non-stick coatings, low dielectric coatings for semi-conductors, low dissipation (low optical toss) coatings for optical wave guides; controlled release coatings, hard membranes, biologically active surfaces, anti-fouling and anti-bacterial coatings. Preferably the coating shows reversible sorption of at least are non-crosslinkable species.

When it is desireable to have patterned coatings, for Example, alternating hydrophobic and hydrophilic regions, this can also be achieved by the process according to the Invention, by using photolithographic processes. Hence, applications where patterning of nano-structured and or nana-porous coatings is desired may also result. This could lead to coatings and articles where the optical or wetting properties are patterned as desired.

Articles with a coating of the present invention include an organic light emitting diode (OLED) display, a polarizer for a LCD, and a PET or TAC film.

Examples

Nano-silicate particles.

Nano-silicate particles MT-ST (round particles) and IPA-ST-UP (elongated particles) were obtained from Nissan Chemical American Corporation. These particles were used in illustration of the invention. Their properties are listed in table 1 below.

Table1. *Types and properties of nano-silica particles*.

| Nano-particle | Particle Size (nm) | $SiO_2$ (wt%) | $H_2O$ (%) | Viscosity (mPa.s.) | Specific Gravity | pH | Particle Shape | Solvent |
|---|---|---|---|---|---|---|---|---|
| MT-ST | 10-15 | 30-31 | < 2.0 | < 5 | 0.98-1.02 | 2-4 | Spherical | Methanol |
| IPA-ST-UP | 9-15 Elongate* | 15-16 | <1.0 | <20 | 0.85-0.90 | 2-4 | Elongated* | Iso-propanol |
| *Elongated particles have a diameter of 9-15 nm with a length of 40-300 nm. (Information source www.snowtex.com). | | | | | | | | |

Example A. Acrylation and surface modification of spherical or elongated silica nano-particles:

The silica nano-oxide particles were modified by adding a trimethoxysilane compound comprising an acrylate group (e.g., a compound according to formula II) together with a compound that inhibits polymerization of the acrylate groups, for example p-methoxy-phenol, to a suspension of the oxide particles in a solvent, for example methyl ethyl ketone. Table 2 shows the exact amounts of chemicals used. After stirring, a catalytic amount of water was added to the mixture and the mixture was refluxed at 80°C for at least 3 hours. Subsequently a dehydrating agent was added to remove any traces of water, and the resultant mixture stirred at 60°C for at least one hour. A suitable dehydrating agent is for example trimethyl orthoformate. Another method for preparing modified particles was to add a methoxy-silane compound comprising an acrylate group together with a compound that inhibits polymerization of the acrylate groups, for example p-methoxy-phenol, to a suspension of the oxide particles in methanol. After stirring, the mixture was refluxed, for example at 60°C for at least 1.5 hours for MT-ST nano-silicates particles or at least 3 hours for IPA-ST-UP nano-silicate particles, and subsequently an alkoxy silane compound, was added. This subsequent trialkoxy silane can be, for example methyl trimethoxy silane, or in case hydrophobic apolar surface characteristic are required can be for example a perfluoroalkyl trialkoxy silane (e.g., a compound according to formula III). After refluxing for at least one more hour at 60°C, a dehydrating agent was added and the resultant mixture was stirred at 60°C for at least one hour.

Example B: Preparation of a coating or film on a substrate

Thin films (typically 100-200nm or up to 5 $\mu$m (microns)) of various mixtures were prepared on microscope glass slides or polyethyleneteraphthalate (PET) films (for transmission measurements) and/or silicon wafers (for measurements of wetting properties and thickness determination) by the following procedure.

A drop of a formulation (see table 3 and 4 for the formulations) was applied to the substrate by spin-coating at a rate of 4800 r.p.m. Thin films (100-200nm) were spin coated from formulations containing less than 10wt-% solids while thicker (1-2 $\mu$m) coatings were spin coated from formulations with ca 35-50wt-% solids, see table 3, 4 and 5. The resultant wet film was crosslinked with UV radiation using a D-bulb under nitrogen at a dose of 1.7 J/cm2. The thickness of the crosslinked transparent coating was measured with a multi-spectral reflectometer (F20, AG Electro Optics), giving a value generally in the range of 100-200 nm. In the case of thicker films 1-5 $\mu$m Samples for contact angle determination were post baked (i.e heated) for 1 hour at 70 °C, prior to contact angle determination.

Example C: Optical properties of surface nano-structured and/or nano-porous coatings

Nano-structured and/or nano-porous films or coatings were prepared as described under "preparation of a coating on a substrate", on one side or both sides of either glass microscope slides or polyethyleneteraphthalate (PET) films from various formulations as listed in Table 3, 4 and 5. Spectral transmission in the visible region of the spectrum was measured with a Perkin-Elmer Lambda-20 UV-Vis spectrometer.

Examples D: Measurement of water contact angle

Static contact angles were measured using a FTA (First Ten Angstroms) 200 apparatus. This piece of equipment consisted of a motorized syringe pump, a sample stage and a video camera. The software used with the system was FTA Video drop shape analysis version 1.98 Build B.

Before the measurements were carried out the surface tension of the water in the syringe was measured. This was done by dispensing a droplet from the syringe, and then recording an image whilst the droplet was still attached to the syringe. The droplet was lit from behind, so it appeared black on a white background. The software measured the dimensions of the droplet and used them to calculate the surface tension.

Static contact angle measurement

The static contact angle of a surface was measured by dispensing a 12$\mu$l droplet of distilled water onto the surface of a coated substrate. 65 images of the droplet were taken over a 130 second period. From the images the software determined the baseline (the surface) and the edges of the droplet, the contact angle was calculated where these lines intercept. The contact angles were determined for at least two droplets on different areas of the surface, the average of these measurements was quoted as the contact angle. Results of static contact angles for various coatings are given in table 6. Contact angle measurements were carried out either directly after post-baking (t=0) or 2.5 days after post-backing (t=2.5 days) this time refers to the age of the sample. The results in table 6 are the contact angles 100 seconds after the drop had been deposited onto the surface of the samples of various ages.

Example E

Measurement of hardness and reduced modulus of coatings

To determine the hardness and reduced modulus of the spincoated coatings, three samples were prepared as described above. The hardness measurements were performed with a Hysitron TriboScope, using a calibrated Berkovich diamond tip as indenter. The tip was inserted into the coatings with a known load, and the penetration depth in the coating was recorded. A typical load function used is shown in Figure 8, this results in a graph of force versus displacement. The hardness was calculated via the relationship H (in GPa) = Fmax / 24.5 d$^2$, where Fmax is the highest load applied and d is the penetration depth. The reduced modulus was calculated from the force - displacement curve using Er = 0.5 $(\pi/24.5\ d^2)^{1/2}$ ($\delta F \delta d$). More details concerning nano-indentation experiments may be found in F.J. Balta Calleja & S. Fakirov, Microhardness of Polymer, Cambridge Un. Press, 2000.

It should be noted the results from nano-identation with respect to hardness and reduced modulus are dependant on the geometry of the tip of the indenter used. Therefore, direct comparison can only be made by using an experimental set up with a tip of similar geometry.

Table 2. *Compounds in weight percentage used for acrylation and surface modification of silica nano particles*

| Material | Modified nano-particle A (Acry-MT-ST) | Modified nano-particle B (Acry-IPA-ST- UP) | Modified nano-particle C (Acry-F-MT-ST) |
|---|---|---|---|
| MT-ST nano-silica Particle size 10-15nm | 24.75wt-% | | 23.81 wt-% |
| IPA-ST-UP elongate nano-silica Particle diameter 9-15nm Particle length 40-300nm | | 13.85wt-% | |
| Int-12A (coupling agent) (See formula II) | 7.84 wt-% | 4.55wt-% | 7.71 wt-% |
| Hydroquinnone mono-methylether (HQMME polymerisation inhibitor) | 0.14 wt-% | 0.87 wt-% | 0.14 wt-% |
| Methyltrimethoxysilane (MTMS surface derivatisation agent) | 1.23% wt-% | 0.72 wt-% | |
| 1H,1H,2H,2H-(Perfluorooctyl) triethoxysilane (apolar surface derivatisation agent) | | | 4.63 wt-% |
| Methanol (solvent) | 57.75 wt-% | | 55.54 |
| Isopropanol (solvent) | | 75.31 wt-% | |
| Trimethyl orthoformate OFM (dehydrating agent) | 8.29 wt-% | 4.70 wt-% | 8.17 wt-% |
| Total | 100 wt-% | 100 wt-% | 100 wt-% |

Table 3. *Formulations for examples and comparative experiments.*

| | Comparative Example 1 | Example 2 | Example 3 | Example 4 | Example 5 | Example 6 |
|---|---|---|---|---|---|---|
| Material | mg | mg | mg | mg | mg | mg |
| Modified nanoparticle A (Acry-MT-ST) (without solvent) | 41.5 | 30.5 | - | - | - | - |
| Modified nanoparticle C (Acry-F-MT-ST) (without solvent) | - | - | 84.0 | 1556.2 | - | 236.1 |
| Modified nanoparticle B (Acry-IPA-ST-UP) (without solvent) | - | - | - | - | 23.52 | - |

(continued)

| | Comparative Example 1 | Example 2 | Example 3 | Example 4 | Example 5 | Example 6 |
|---|---|---|---|---|---|---|
| Dipentaerythritol pentaacrylate (reactive diluent) | 22.1 | - | - | - | | - |
| Ethoxylated (9) trimethylolpropane triacrylate (reactive diluent) | 14.6 | - | - | - | | - |
| Methanol (solvent) | 1379.4 | 1016 | 1588.9 | 2621.7 | 460.75 | 498.9 |
| Isopropanol (solvent) | - | - | - | - | 99.57 | - |
| Photoinitiator (Irgacure184 trademark by Ciba) | 0.39 | 0.31 | 0.21 | 3.9 | 0.15 | 10 |
| 1H,1H,6H,6H-Perfluoro-1,6-hexyl diacrylate.(reactive diluent) | - | - | - | - | - | 248 |

Table 4. *Formulations for examples and comparative experiments, effect of increasing amount of reactive diluent on anti-reflective properties.*

| wt-% Dipentaerythritol pentaacrylate w.r.t. total weight of modified particle B and diluent | Example 7 (0%) | Example 8 (2.7%) | Example 9 (5.8%) | Example 10 (11.2%) | Example 11 (15.6%) |
|---|---|---|---|---|---|
| Material | Mg | mg | mg | mg | mg |
| Modified nano particle B (Acry-IPA-ST-UP) | 21.7 | 22.1 | 28.0 | 26.5 | 23.3 |
| Dipentaerythritol pentaacrylate (reactive diluent) | 0 | 0.62 | 1.72 | 3.36 | 4.29 |
| Methanol (solvent) | 531.0 | 530.9 | 680.2 | 639.8 | 561.8 |
| Isopropanol (solvent) | 92.0 | 94.7 | 118.6 | 112.2 | 98.4 |
| Photo initiator (Irgacure 184 trademark by Ciba) | 0.13 | 0.14 | 0.19 | 0.18 | 0.16 |
| Maximum Transmission (%) | 97.40 | 97.40 | 97.25 | 97.20 | 96.80 |

The data form table shows the effect of increasing amount (wt-%) of reactive diluent (Dipentaerythritol pentaacrylate) on the anti-reflective properties of surface nano-structured and nano-porous coating comprising elongated acrylated nano-particles (modified particle B (Acry-IPA-ST-UP)). It can be seen that increasing the relative weight percentage of reactive diluent with respect to nano-particles reduces the anti-reflective performance of the coatings as the maximum percentage of transmission decreases.

For a surface a nano-structured and/or nano-porous coating to act as an anti-reflective layer the coating must have an effective refractive index which is ideally the square root of that of the substrate. This is achieved by the air in the surface nano-structure and/or nano-pores effectively diluting the refractive index of the bulk of the coating. The effect of increasing amounts of reactive diluent is two fold. Firstly, as can be seen in figure 1 the increasing amount of reactive diluent leads to smaller surface nano-structure and nano-pores and thus the volume of air within these features is reduced as well as the spatial length scale of the refractive index gradient with increasing amount of reactive diluent. Secondly the voids of air between individual nano particles, which will also reduce the refractive index of the coating, are gradually filled as the amount of reactive diluent increases. Hence combining these two effects, the overall effective refractive index of the coating increases and hence the anti-reflective performance (% transmission) decreases. Example transmission spectra from this series of examples can be found in figure 7. If the relative amount of reactive diluent is increased to the point that the volume fraction thereof no longer satisfies the relationship in equation 2, a non surface nano-structured and/or nano-porous coating will result. Such coatings will display no or extremely little anti-reflective performance. This can be seen illustrated by the comparative example of a hard coat sample (thickness 100-200nm) the transmission spectra of which can be seen as spectrum 4 in figure 3. Here there is almost no improvement in the maximum transmission (95%) and in hence anti-reflective performance with respect to the transmission of the glass microscope slide substrate (94.8%).

Table 5. *Influence photo initiator concentration on Anti-reflective properties*

| % Irgacure184 w.r.t. modified particle B | Example 12 (0.10%) | Example 13 (0.51%) | Example 14 (0.93%) | Example 15 (2.09%) |
|---|---|---|---|---|
| Material | mg | mg | mg | mg |
| Modified nano particle B (Acry-IPA-ST-UP) | 27.4 | 28.7 | 35.2 | 23.5 |
| Methanol (solvent) | 664.1 | 672.5 | 855.8 | 570.6 |
| Isopropanol (solvent) | 119.5 | 139.8 | 150.0 | 100.0 |
| Photo initiator (Irgacure 184 trademark by Ciba) | 0.026 | 0.148 | 0.327 | 0.490 |
| Transmission Maximum | 97.2 | 97.2 | 97.3 | 97.2 |

As stated previously, several coating nano-structuring techniques rely on phase separation and washing for the formation of the nano-structured and/or nano-porous coatings. Here the rate or kinetic phase separation play an important role in the dimensions of the coatings surface nano-structures and/ nano-pores, in the case of crosslinking induced phase separation the rate or kinetic of crosslinking similarly effect the dimensions of the nano-features. If such coatings are to be applied as for example anti-reflective coatings the anti-reflective performance will vary with any change in the phase separation kinetics. In the case of reactive nano-particles with little or no reactive diluent (i.e. within the framework of the invention), the dimensions of the surface nano-structure and nano-pores are independent of the rate of crosslinking. This can be deduced from table 5, which shows that increasing amounts of UV photo-initiator have no effect on the anti-reflective properties of the coatings. Any person skilled in the art will realise that increasing amount of photo-initiator will lead to an increase in the crosslinking rate (kinetics.) As this has little or no effect on the maximum transmission, the nano-structuring technique and thus anti-reflective performance are independent of crosslinking rate (kinetics).

Table 6. Contact angles various hydrophobic and hydrophilic nano-structured and/or nano-porous coatings.

| Formulation | Rmax | Contact angle t=0 days | Contact angle t=2.5 days |
|---|---|---|---|
| Examples 1 (Hard coat) | 6nm | | 62.1° |

(continued)

| Formulation | Rmax | Contact angle t=0 days | Contact angle t=2.5 days |
|---|---|---|---|
| Example 2 (Acry-MT-ST) | 119nm | | 50.3° |
| Example 3 (Acry-F-MT-ST) (thickness 100-200nm) | 133.5nm | 97.3° | 120.7° |
| Example 4 (Acry-F-MT-ST) (thickness 1-5μm) | 65.5nm | 95.9° | 114.1° |
| Example 5 (Acry-IPAST-UP) | 108nm | | 28.2° |
| Example 6 (Example 3 + Fluorodiacrylate) | 27nm | | 108.5° |

As known from literature the static water contact angle is related to both the hydrophilicity or hydrophobicity of the surface, which is determined by its surface chemistry, and the overall roughness of a surface. The static water contact angle of Example 1 as shown in Table 6 is typical that of a polar acrylate hard coating. If the surface is surface nano-structured and/or nano-porous, the static water contact angle drops significantly. This is the case for Example 2 (Acry-MT-ST) where the value of the contact angle was 50.3° and for Example 5 (Acry-IPA-ST-UP) were the value is 28.2°. Similary, the static water contact angle of Example 6, a coating of a formulation comprising hydrophobically modified reactive nano-particles (Acry-F-MT-ST) with hydrophobic reactive diluents (Fluorodiacrylate), was 108.5° and its roughness was relatively low, 27 nm. In the case of Example 4 (Acry-F-MT-ST) (thickness 1-5μm) and 3 (Acry-F-MT-ST) (thickness 100-200nm) the value of the roughness increased and therefore the static contact angle increased respectively as well. This demonstrates that by controlling both the surface chemistry in terms of polarity of the nanoparticles and the roughness of the resultant coating through the process acoording to the invention, the wettting properties can be varied greatly as well.

Table 7: Hardness, Reduced Modulus and Scratch results of example 2, 3 and 7

| Formulation | Hardness (Gpa) | Reduced Modulus (Gpa) |
|---|---|---|
| | | |
| Example 2 Acr MT-ST | 1.2 +/- 0.1 | 22 +/- 2 |
| Example 3 Acr FI MT-ST | 0.5 +/- 0.05 | 14 +/-1 |
| Example 7 Acry-IPA-ST-UP | 2.5 +/- 0.2 | 45 +/- 5 |

Figures

Figure 1. 3D Atomic force microscopy (AFM) images of coatings prepared from example formulations.

a) Table 3, Example 1 (Rmax 6nm).

b) Table 3, Example 3 (Rmax

c) Table 3, Example 2 (Rmax 119nm)
(Rmax 142nm)

d) Table 4, Example 7

e) Table 4, Example 8 (Rmax 48nm)

Figure 1 depicts the three dimensional (3D) topography of various example and comparative coatings as acquired by atomic force microscopy (AFM). The maximum height of the features (Rmax) in these images is given as the maximum height difference over the whole area of the image. Figure 1 a shows the surface roughness of a comparative, conventional hard coat sample, the components of which can be found in table 3, example 1. As can be deduced form this AFM image the surface roughness of the coating is in the range of ca 6nm. This is a not a nano-structured and/or nano-porous coating as described within the framework of the invention. For this hard coat the relative volume of reactive diluent is so large that it does not satisfy the rule expressed in equation 2 and thus does not form nano-structured and/or nano-porous coatings. In this case the 6nm roughness is due to individual nano-particles partially sticking out of the surface of the coating. Figure 1 b and figure 1 c show the surface topography of coatings of fluorinated acrylated spherical nano-silicates (modified nano-particle C) (Table 3, Example 3) and a coating of acrylated spherical nano-silicates (modified nano-particle A) (Table 3, Example 2), respectively. For both of these coating the lack of any reactive diluent leads to the formation of nano-structured and nano-porous coatings as described within the framework of the invention. Similarly figure 1 d shows a coating with a surface roughness of ca 140nm, which is formed by the crosslinking of elongated acrylated nano-silicate particle (modified nano-particle B) (table 4, example7) without any reactive diluent. Here again the absence of any reactive diluent leads to the formation of nano-structured and nano-porous coatings. Figure 1 e (table 4, example 8) shows the effect of small amount of reactive diluents (2.7wt-% of total solids) on the surface topography of coatings comprising elongated acrylated nano-silicates (modified nano-particle B). It can be seen that the addition of small volumes of reactive diluents lead to a decrease of the maximum feature height (Rmax). However again the relative volumes of reactive diluent are so low that they satisfy the relationship in equation 2 and thus form nano-structured and nano-porous coatings.

Figure 2. *AFM cross-section images of coatings prepared from example formulations.*

a) Table 3, Example 2, Rmax: 78.2          b) Table 4, Example 7, Rmax: 95.9

Figure 2 shows the cross-sectional topography as acquired by Atomic force microscopy. For these cross-sections, the Rmax given in figure 2 is the maximum height difference across the cross-section. Figure 2a shows the cross-sectional topography of a coating of acrylated spherical nano-silicates (modified nano-particle A) (Table 3, Example 2). Here a surface nano-structure (roughness on the surface) as well as nano-pores (deeper features) can be seen. Similarly figure 2b shows the cross-sectional topography of a coating of elongated acrylated nano-silicates (modified nano-particle B) (Table 4, Example 7). Again here the roughness on the surface is the surface nano-structure while the deepest features can be regarded as nano-pores. It is also expected that small voids of air will exist in the bulk of the coating between individual nano-particles or clusters thereof however, these nano-pores cannot be visualised by AFM.

Figure 3. *Visible transmission spectra of various examples and comparative coatings on spin-coated glass slides (one side coated): 1 = unmodified MT-ST, 3 wt-%; 2 = Acry-MT-ST, table 2, example 2; 3 = Acry-F-MT-ST, table 2, example 3; 4 = hard coat, table 2 example 1; 5 = uncoated glass microscope slide.*

Figure 3 shows the visible transmission spectra of a number of example and comparative coatings on one side of a glass microscope slide substrate. Figure 3.5, shows the transmission spectrum of an uncoated glass microscope slide. Figure 3.1 shows the transmission spectra of unmodified MT-ST nano-particles, which were spin-coated at 4800rpm from a suspension of 3wt-% solids, giving a coating thickness in the range of 100-200nm. This spectrum shows that unmodified MT-ST nano-silicates display anti-reflective properties as the maximum transmission increases to ca 96.8% with respect to the maximum that of the uncoated glass microscope slides (94.8%). Obviously such a coating would have no mechanical durability as the unmodified MT-ST nano-particles are not surface modified with reactive groups and therefore are incapable of crosslinking under the condition outlined in preparation of a coating on a substrate (example B). In this coating the there is a maximum space between nano-particles, as the surface of the MT-St nano-particles is not modified. Once the surface of these particles is modified with the coupling agent (Int-12A, formula II), which is reactive towards crosslinking, and surface derivatisation agent Methyltrimethoxysilane, the space between the nano-particles is partially filled by the coupling agent and surface modifying groups, a transmission spectra such as is depicted in figure 3.2 results. As the space between nano-particles is partially filled by the surface groups, the effective refractive index increases and the transmission (and thus the anti-reflective performance) of the coating drops.

This effect can be seen again when the surface modifying agent methyltrimethoxysilane groups are replaced with even bulkier groups such as 1H, 1H,2H,2H-(Perfluorooctyl) triethoxysilane (apolar surface derivatisation agent), see figure 3.3. In this case even more of the space between the nano-particles is filled with the bulky perfluoro-octyl chains and the transmission and thus the anti-reflective properties drop with respect to figure 3.2 and 3.1. In the case of Figure 3.4 the space between the nano-particle is completely filled with reactive diluent and thus this conventional hard coat has a maximum transmission (95.0%), which differs very slightly from that of the uncoated glass microscope slide (94.8%).

Figure 4 shows the visible transmission spectra of two example coatings on spin-coated glass slides (one side coated). This figure illustrates the fact that the use of elongated acrylated nano-particles (Acry-IPA-ST-UP) (figure 4.1) leads to nano-structured and nano-porous coatings containing more air than is the case for coatings of acrylated spherical nano-particles (Acry-MT-ST) (figure 4.2). This can be deduced through the fact that the maximum transmission (97.4%) and thus anti-reflective performance of the nano-structured and nano-porous coating in figure 4.1, is considerably higher than that of figure 4.2 (96.6%).

Figure 5. *Visible transmission spectra of examples coatings of Acry-IPA-ST-UP, table 4, example 7 on spin-coated glass slides; 1 = two sides coated; 2 = on side coated; 3 = uncoated glass microscope slide.*

Figure 6. *Visible transmission spectra of examples coatings of Acry-IPA-ST-UP, table 4, example 7, spin-coated onto PET film; 1 = two sides coated, 2 = on side coated; 3 = uncoated PET film.*

Figures 5 and 6 show the effect of coating both sides of reflective substrate, glass microscope slides in the case of figure 5 and PET films in case of figure 6, with a coating of crosslinked acrylated elongated nano-particles (Acry-IPA-ST-UP, modified particle B). As both the top and bottom surface of the untreated substrates cause reflection transmission greater than 98% are usually only possible if both sides of the substrate have been coated. In the case of both of these examples the coating on both sides of the substrates results in objects, which are almost invisible to the naked eye and where surface reflections are only observable, by direct reflection of bright light sources.

Figure 7. *Visible transmission spectra of examples coatings of Acry-IPA-ST-UP with differing wt-% of reactive diluent (*Dipentaerythritol pentaacrylate*)(Table 4) on spin-coated glass slides (one side coated); 1 =example 7(0wt-% diluent); 2 = example 8 (2.7wt-% diluent); 3 = example 10 (11.2wt-% diluent), 4 = uncoated glass microscope slide.*

Figure 8. Typical Load-Function used for the indentation Experiments

## Formula II)

### Int-12A

## Formula III)

### 1H,1H,2H,2H-(Perfluorooctyl) triethoxysilane

## Claims

1. A process for the preparation of a surface nano-structured and/or nano-porous coating having a thickness of between 50-200 nm. comprising the steps of:

    a) applying a mixture to a substrate which mixture comprises:

      reactive nano-particles having organic polymerisable groups on their surface
      at least one solvent

    b) inducing crosslinking and/or polymerisation in the mixture applied to the substrate.

2. A process according to claim 1, wherein the reactive nano-particles are oxide particles.

3. A process according to any one of claims 1-2 wherein the particles are silicon oxide or zirconium oxide particles.

4. A process according to any one of claims 1-3, wherein the reactive nano-particles are elongated.

5. A process according to any one of claims 1-4. wherein the reactive nano-particles have an aspect ratio of greater than 5.

6. A process according to any one of claims 1-5, wherein the reactive nano-particles have a length of less than 350 nm.

7. A process according to any one of claims 1-6, wherein the mixture contains between 0.5 and 50 wt% solids, defined as all components excluding the solvent, relative to the total weight of the mixture.

8. A process according to any one of claims 1-7, wherein the solvent is methanol or isopropanol.

9. A process according to any one of claims 1-8, wherein the mixture comprises reactive diluent in an amount of less than 20wt% based on the total weight of mixture as applied in step a).

10. A process according to any one of claims 9, wherein the reactive diluent has two or more polymerisable groups.

11. A process according to any one of claims 1-10, wherein the crosslinking and/or polymerisation is induced by electron beam radiation, electromagnetic radiation, thermally, or by adding moisture.

12. A process according to any one of claims 1-11, wherein the volume fraction of the compound having at least one polymerizable group is less than 1 - the random close packing volume fraction of the nano-particles.

13. A process according to any one of claims 1-12, wherein the crosslinking is induced by applying UV-radiation.

14. A coating, said coating having a nano-structured surface and/or being nano-porous, obtainable by the process according to claim 1, said coating having a thickness of between 50-200 nm, wherein the transmission, for at least part of the electromagnetic spectrum between 400 and 800 nm, is at least 0.5% higher compared to the same substrate without a coating.

15. A coating according to claim 14 containing an amount of reacted nano-particles between 70-100 wt%, relative to the weight of the coating.

16. A coating according to any one of claims 14-15, having a hardness equal to or greater than 0.5 GPa, as measured by nano-indention.

17. A coating according to any one of claims 14-16, having a reduced modulus equal to or greater than 8 GPa as measured by nano-indention.

18. A coating according to any one of claims 14-17, which coating increases the transmission by at least 1% for at least part of the electromagnetic spectrum between 400 and 800 nm if the coating is present on a transparent substrate in comparison with the same substrate without a coating.

19. A coating according to claim 18, which coating increases the transmission by at least 2 %.

20. A coating according to any one of claims 14-19, having a static water contact angle of less than 60°.

21. A coating according to any one of claims 14-19, having a static water contact angle of more than 90°.

22. A coating according to claim 21, having a contact angle of more than 120°.

23. Use of a coating according to any one of claims 14-22 as an antireflective coating.

24. Use of a coating according to any one of claims 14-19 to increase the static water contact angle of the surface of an object relative to the same object without a coating.

25. Use of a coating according to any one of claims 14-19 to decrease the static water contact angle of the surface of an object relative to the same object without a coating.

26. Use of a coating according to any one of claims 14-22 as a membrane.

27. An article comprising a coating according to any one of claims 14-22.

28. An article according to claim 27, which article is a display.

29. An article according to claim 27 or 28, which article is an organic light emitting diode (OLED) display.

30. A coating according to any one of claims 14-22 showing reversible sorption of at least one non-cosslinkable species

31. An article according to claim 27, which article is a polarizer for a liquid crystal display (LCD).

32. LCD devices comprising an article according to claim 31.

**33.** An article according to claim 27, which article is a polyethyleneterphtalate (PET) film or cellulosetriacetate (TAC) film.

**34.** A display comprising the article according to claim 33.

**Patentansprüche**

**1.** Verfahren zur Herstellung einer oberflächennanostrukturierten und/oder -nanoporösen Beschichtung mit einer Dicke zwischen 50 und 200 nm, bei dem man

    a. eine Mischung auf ein Substrat aufbringt, wobei die Mischung
    reaktive Nanopartikel mit organischen polymerisierbaren Gruppen an ihrer Oberfläche und
    mindestens ein Lösungsmittel
    enthält,
    b. die Vernetzung und/oder Polymerisation der auf das Substrat aufgebrachten Mischung induziert.

**2.** Verfahren nach Anspruch 1, bei dem es sich bei den reaktiven Nanopartikeln um Oxidpartikel handelt.

**3.** Verfahren nach einem der Ansprüche 1-2, bei dem es sich bei den Partikeln um Siliciumoxid- oder Zirconiumoxidpartikel handelt.

**4.** Verfahren nach einem der Ansprüche 1-3, bei dem die reaktiven Nanopartikel langgestreckt sind.

**5.** Verfahren nach einem der Ansprüche 1-4, bei dem die reaktiven Nanopartikel ein Aspektverhältnis von mehr als 5 aufweisen.

**6.** Verfahren nach einem der Ansprüche 1-5, bei dem die reaktiven Nanopartikel eine Länge von weniger als 350 nm aufweisen.

**7.** Verfahren nach einem der Ansprüche 1-6, bei dem die Mischung zwischen 0,5 und 50 Gew.-% Feststoffe, definiert als alle Komponenten ausschließlich des Lösungsmittels, bezogen auf das Gesamtgewicht der Mischung, enthält.

**8.** Verfahren nach einem der Ansprüche 1-7, bei dem es sich bei dem Lösungsmittel um Methanol oder Isopropanol handelt.

**9.** Verfahren nach einem der Ansprüche 1-8, bei dem die Mischung reaktives Verdünnungsmittel in einer Menge von weniger als 20 Ges.-%, bezogen auf das Gesamtgewicht der wie in Schritt a) aufgebrachten Mischung, enthält.

**10.** Verfahren nach einem der Ansprüche 1-9, bei dem das reaktive Verdünnungsmittel zwei oder mehr polymerisierbare Gruppen aufweist.

**11.** Verfahren nach einem der Ansprüche 1-10, bei dem man die Vernetzung und/oder Polymerisation durch Elektronenstrahlung, elektromagnetische Strahlung, thermisch oder durch Zugabe von Feuchtigkeit induziert.

**12.** Verfahren nach einem der Ansprüche 1-11, bei dem der Volumenanteil der Verbindung mit mindestens einer polymerisierbaren Gruppe weniger als 1 - dem Volumenanteil der dichten Zufallspackung der Nanopartikel beträgt.

**13.** Verfahren nach einem der Ansprüche 1-12, bei dem man die Vernetzung durch Einwirkung von UV-Strahlung induziert.

**14.** Beschichtung, wobei die Beschichtung eine nanostrukturierte Oberfläche aufweist und/oder nanoporös ist, die nach dem Verfahren nach Anspruch 1 erhältlich ist, wobei die Beschichtung eine Dicke zwischen 50 und 200 nm aufweist, wobei die Transmission über mindestens einen Teil des elektromagnetischen Spektrums zwischen 400 und 800 nm im Vergleich zu dem gleichen Substrat ohne Beschichtung mindestens 0,5% höher ist.

**15.** Beschichtung nach Anspruch 14, die eine Menge an umgesetzten Nanopartikeln zwischen 70 und 100 Gew.-%, bezogen auf das Gewicht der Beschichtung, enthält.

**16.** Beschichtung nach einem der Ansprüche 14-15 mit einer durch Nanoindentation gemessenen Härte größer gleich 0,5 GPa.

**17.** Beschichtung nach einem der Ansprüche 14-16 mit einem durch Nanoindentation gemessenen reduzierten Modul größer gleich 8 GPa.

**18.** Beschichtung nach einem der Ansprüche 14-17, die die Transmission über mindestens einen Teil des elektromagnetischen Spektrums zwischen 400 und 800 nm im Vergleich zu dem gleichen Substrat ohne Beschichtung um mindestens 1% erhöht, wenn die Beschichtung auf einem transparenten Substrat vorliegt.

**19.** Beschichtung nach Anspruch 18, die die Transmission um mindestens 2% erhöht.

**20.** Beschichtung nach einem der Ansprüche 14-19 mit einem statischen Wasserkontaktwinkel von weniger als 60°.

**21.** Beschichtung nach einem der Ansprüche 14-19 mit einem statischen Wasserkontaktwinkel von mehr als 90°.

**22.** Beschichtung nach Anspruch 21 mit einem Kontaktwinkel von mehr als 120°.

**23.** Verwendung einer Beschichtung gemäß einem der Ansprüche 14-22 als Antireflexionsbeschichtung.

**24.** Verwendung einer Beschichtung gemäß einem der Ansprüche 14-19 zur Erhöhung des statischen Wasserkontaktwinkels der Oberfläche eines Objekts gegenüber dem gleichen Objekt ohne Beschichtung.

**25.** Verwendung einer Beschichtung gemäß einem der Ansprüche 14-19 zur Erniedrigung des statischen Wasserkontatkwinkels der Oberfläche eines Objekts gegenüber dem gleichen Objekt ohne Beschichtung.

**26.** Verwendung einer Beschichtung gemäß einem der Ansprüche 14-22 als Membran.

**27.** Gegenstand, umfassend eine Beschichtung gemäß einem der Ansprüche 14-22.

**28.** Gegenstand nach Anspruch 27, bei dem es sich um eine Anzeige handelt.

**29.** Gegenstand nach Anspruch 27 oder 28, bei dem es sich um eine organische Leuchtdiodenanzeige (OLED-Anzeige) handelt.

**30.** Beschichtung nach einem der Ansprüche 14-22, die eine reversible Sorption mindestens einer nicht vernetzbaren Spezies zeigt.

**31.** Gegenstand nach Anspruch 27, bei dem es sich um einen Polarisator für eine Flüssigkristallanzeige (LCD) handelt.

**32.** LCD-Vorrichtungen, umfassend einen Gegenstand gemäß Anspruch 31.

**33.** Gegenstand nach Anspruch 27, bei dem es sich um eine Polyethylenterephthalat-Folie (PET-Folie) oder Cellulosetriacetat-Folie (TAC-Folie) handelt.

**34.** Anzeige, umfassend den Gegenstand gemäß Anspruch 33.

**Revendications**

**1.** Procédé de préparation d'un revêtement nano-structuré et/ou nanoporeux en surface, présentant une épaisseur comprise entre 50 et 200 nm, comprenant les étapes consistant à :

a) appliquer un mélange à un substrat, ledit mélange comprenant :

des nanoparticules réactives portant des groupes polymérisables organiques sur leur surface
au moins un solvant

b) provoquer la réticulation et/ou la polymérisation dans le mélange appliqué au substrat.

2. Procédé selon la revendication 1, dans lequel les nanoparticules réactives sont des particules d'oxyde.

3. Procédé selon l'une quelconque des revendications 1 ou 2, dans lequel les particules sont des particules d'oxyde de silicium ou d'oxyde de zirconium.

4. Procédé selon l'une quelconque des revendications 1 à 3, dans lequel les nanoparticules réactives sont allongées.

5. Procédé selon l'une quelconque des revendications 1 à 4, dans lequel les nanoparticules réactives ont un rapport de forme supérieur à 5.

6. Procédé selon l'une quelconque des revendications 1 à 5, dans lequel les nanoparticules réactives ont une longueur inférieure à 350 nm.

7. Procédé selon l'une quelconque des revendications 1 à 6, dans lequel le mélange contient entre 0,5 et 50 % en poids de matières solides, définies comme tous les composants à l'exclusion du solvant, par rapport au poids total du mélange.

8. Procédé selon l'une quelconque des revendications 1 à 7, dans lequel le solvant est le méthanol ou l'isopropanol.

9. Procédé selon l'une quelconque des revendications 1 à 8, dans lequel le mélange comprend un diluant réactif en une quantité inférieure à 20 % en poids, par rapport au poids total du mélange tel qu'appliqué dans l'étape a).

10. Procédé selon l'une quelconque des revendications 1 à 9, dans lequel le diluant réactif comporte au moins deux groupes polymérisables.

11. Procédé selon l'une quelconque des revendications 1 à 10, dans lequel la réticulation et/ou la polymérisation sont provoquées par un rayonnement de faisceaux d'électrons, un rayonnement électromagnétique, par voie thermique ou en ajoutant de l'humidité.

12. Procédé selon l'une quelconque des revendications 1 à 11, dans lequel la fraction volumique du composé portant au moins un groupe polymérisable est inférieure à 1, la fraction volumique en empilement aléatoire compact des nanoparticules.

13. Procédé selon l'une quelconque des revendications 1 à 12, dans lequel la réticulation est réalisée en appliquant un rayonnement UV.

14. Revêtement, ledit revêtement présentant une surface nanostructurée et/ou étant nanoporeux, pouvant être obtenu par le procédé selon la revendication 1, ledit revêtement présentant une épaisseur comprise entre 50 et 200 nm, où la transmission, pour au moins une partie du spectre électromagnétique compris entre 400 et 800 nm, est supérieure d'au moins 0,5 % par rapport au même substrat sans revêtement.

15. Revêtement selon la revendication 14, contenant une quantité de nanoparticules ayant réagi comprise entre 70 et 100 % en poids, rapporté au poids du revêtement.

16. Revêtement selon l'une quelconque des revendications 14 à 15, présentant une dureté supérieure ou égale à 0,5 GPa, telle que mesurée par nano-indentation.

17. Revêtement selon l'une quelconque des revendications 14 à 16, présentant un module réduit supérieur ou égal à 8 GPa, tel que mesuré par nano-indentation.

18. Revêtement selon l'une quelconque des revendications 14 à 17, ledit revêtement augmentant la transmission d'au moins 1 % pour au moins une partie du spectre électromagnétique compris entre 400 et 800 nm si le revêtement est présent sur un substrat transparent, par comparaison au même substrat sans revêtement.

19. Revêtement selon la revendication 18, ledit revêtement augmentant la transmission d'au moins 2 °- °.

**20.** Revêtement selon l'une quelconque des revendications 14 à 19, présentant un angle de contact statique avec l'eau inférieur à 60°.

**21.** Revêtement selon l'une quelconque des revendications 14 à 19, présentant un angle de contact statique avec l'eau supérieur à 90°.

**22.** Revêtement selon la revendication 21, présentant un angle de contact supérieur à 120°.

**23.** Utilisation d'un revêtement selon l'une quelconque des revendications 14 à 22 comme revêtement antireflet.

**24.** Utilisation d'un revêtement selon l'une quelconque des revendications 14 à 19 pour accroître l'angle de contact statique avec l'eau de la surface d'un objet par rapport au même objet sans revêtement.

**25.** Utilisation d'un revêtement selon l'une quelconque des revendications 14 à 19 pour réduire l'angle de contact statique avec l'eau de la surface d'un objet par rapport au même objet sans revêtement.

**26.** Utilisation d'un revêtement selon l'une quelconque des revendications 14 à 22 comme membrane.

**27.** Article comprenant un revêtement selon l'une quelconque des revendications 14 à 22.

**28.** Article selon la revendication 27, ledit article étant un écran.

**29.** Article selon la revendication 27 ou 28, ledit article étant un écran à diodes électroluminescentes organiques (OLED).

**30.** Revêtement selon l'une quelconque des revendications 14 à 22, présentant une sorption réversible d'au moins une espèce non réticulable.

**31.** Article selon la revendication 27, ledit article étant un polariseur pour écran à cristaux liquides (LCD).

**32.** Dispositifs LCD comprenant un article selon la revendication 31.

**33.** Article selon la revendication 27, ledit article étant un film de téréphtalate de polyéthylène (PET) ou un film de triacétate de cellulose (TAC).

**34.** Écran comprenant l'article selon la revendication 33.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US B655103 A
- DE 19746885 A
- US 6130152 A
- US 6319852 B
- US 06025455 A
- WO 0018696 A
- US 5582859 A

### Non-patent literature cited in the description

- **MOORE, G.E.** *Electronics,* 1965, vol. 38 (8
- **SNOW, E. S. ; CAMPBELL P. M.** *Science,* 1995, 1639-1641
- **CROMMIE, M. F. ; LUTZ, C.P. ; EIGLER, D. M.** *Science,* 1993, vol. 262, 218-219
- **SMITH, H. I. ; ROGERS, J. A. ; BERNACKI, S.E.** *J. Vac. Sci. Technol.,* 1973, 913-917
- **STEINER et al.** *Science,* 1999, vol. 283, 520-522
- **IBN-ELHAJ ; SCHADT.** *Nature,* 2001, vol. 410, 796-799
- **SAAR, M.O. et al.** *Earth and Planetary Science Letters,* 2001, vol. 187, 367-379
- **VILLARRUEL, F. X. et al.** *Condensed Mater,* February 2000
- **D. CHEN.** *Solar Energy Materials & Solar Cells,* 2001, vol. 86, 313-336
- **NUN ; OLES ; SCHLEICH.** *Macromol. Symp.,* 2002, vol. 187, 677-682